# EUROPEAN PATENT APPLICATION

(11) **EP 4 481 881 A1**
(43) Date of publication of application: **25.12.2024**
(21) Application number: 22926189.6
(22) Date of filing: 16.11.2022
(51) Int. Cl.: H01M 10/0585, H01M 10/42, H01M 4/13

(54) **ALL SOLID BATTERY**

(30) Priority: 14.02.2022 KR 20220019186
(71) Applicant: SAMSUNG SDI CO., LTD., Giheung-gu Yongin-si, Gyeonggi-do 17084 (KR)
(72) Inventor: MIN, Myoungki, Yongin-si, Gyeonggi-do 17084 (KR); KIM, Jin-Woo, Yongin-si, Gyeonggi-do 17084 (KR); PARK, Heetaek, Yongin-si, Gyeonggi-do 17084 (KR)
(74) Representative: Gulde & Partner
(86) International application number: PCT/KR2022/018049
(87) International publication number: WO 2023/153591

(57) **Abstract**

An all-solid-state battery according to an embodiment may include a positive electrode plate provided with an active material on a positive electrode current collector, a solid electrolyte layer disposed on one side of the positive electrode plate, and a negative electrode plate disposed on one side of the solid electrolyte layer, where the positive electrode plate may include an activation area of the active material, and an inactivation area laser-processed on an outer boundary edge of the activation area.

## Description

### [Technical Field]

The present invention relates to an all-solid-state battery, and more particularly, to an all-solid-state battery having an electrode structure that prevents internal short circuit for stable operation of the cell.

### [Background Art]

The all-solid-state battery includes a positive electrode plate, a solid electrolyte layer, and a negative electrode plate. The solid electrolyte layer is a medium that conducts lithium ions. In the case of a lithium precipitation-type all-solid-state battery, lithium ions moved from the positive electrode plate precipitate and accumulate as metal on the negative electrode plate, and lithium metal precipitates on the negative electrode plate when charging, regardless of the presence or absence of an active material in the negative electrode plate.

An all-solid-state battery having a precipitated negative electrode plate does not have a housing, and during charging, lithium ions moved from the positive electrode plate precipitate on the negative electrode plate, and during discharging, lithium ions accumulated on the negative electrode plate dissociate from the negative electrode plate and move back to the positive electrode plate.

When charging, lithium precipitates on the negative electrode plate and the volume of the all-solid-state battery expands, so lithium precipitation becomes non-uniform in a free state where no pressure is applied to the all-solid-state battery. As charging and discharging progress, the non-uniform precipitation of lithium is amplified and the solid electrolyte layer is partially broken, which may cause an internal short circuit. In order to solve the non-uniformity of lithium precipitation, pressure is applied to the outside of the all-solid-state battery.

Meanwhile, the continuously supplied electrode plates are punched into unit electrode plates of appropriate shapes using physical blades, thereby forming positive and negative electrode plates. The positive electrode plate and the negative electrode plate formed by punching may be damaged due to burrs on the edges of the plates. In other words, active material may fall from the edge and cause a short circuit in the cell.

In addition, the edges of the positive electrode plate may be abnormally activated due to high pressure during cell manufacturing conditions, easily causing short circuit of the cell. Current density is concentrated at the edge of the positive electrode plate compared to other parts. Therefore, it is necessary to manage the edges of the positive electrode plate, which are vulnerable to pressure, as the possibility of short circuits at the edges is higher.

### [Disclosure]

### [Technical Problem]

One embodiment is to provide an all-solid-state battery that prevents short circuit due to damage to the edge of the positive electrode plate. In addition, one embodiment is to provide an all-solid-state battery that prevents short circuit of the edge of the positive electrode plate under high pressure conditions.

### [Technical Solution]

An all-solid-state battery according to an embodiment may include a positive electrode plate provided with an active material on a positive electrode current collector, a solid electrolyte layer disposed on one side of the positive electrode plate, and a negative electrode plate disposed on one side of the solid electrolyte layer, where the positive electrode plate may include an activation area of the active material, and an inactivation area laser-processed on an outer boundary edge of the activation area.

The positive electrode plate may be formed by laser-cutting the positive electrode current collector on which the active material is continuously coated together with an active material layer.

The inactivation area may be configured to block entry and exit of lithium ions.

The inactivation area may be configured to block entry and exit of lithium ions through deformation of the active material crystal structure on the positive electrode plate.

The inactivation area may be configured to block entry and exit of lithium ions through denaturation of solid electrolyte in the solid electrolyte layer.

In the inactivation area, the positive electrode current collector may be melted and modified to be contained in the active material.

The positive electrode plate may be formed by laser-cutting the positive electrode current collector on which the active material is pattern-coated.

The inactivation area may be formed in a convex raised portion on an outer boundary edge.

The inactivation area may be formed in a width of 0.1 to 1 mm.

### [Advantageous Effects]

An all-solid-state battery according to an embodiment is provided with an inactivation area of a predetermined range by laser-cutting the positive electrode plate and by laser-processing the active material on the outer boundary edge of the positive electrode plate, and accordingly, the short circuit due to damage to the edge of the positive electrode plate and the short circuit of the edge of the positive electrode plate due to high pressure condition may be prevented.

### [Description of the Drawings]

FIG. 1 may be a cross-sectional view of a charged state of an all-solid-state battery according to an embodiment of the present invention.
FIG. 2 is a top plan view of a positive electrode plate applied to FIG. 1.
FIG. 3 is a cross-sectional view taken along line III-III of FIG. 2.
FIG. 4 shows, as a Comparative Example, an image of an energy dispersive X-ray spectroscopy (EDS) with respect to a cross-section of a positive electrode plate that is physically cut.
FIG. 5 shows, as an embodiment, an image of an electron microscopy (SEM) with respect to a cross-section of the laser-cut positive electrode plate.
FIG. 6 shows, as an embodiment, an image of an energy dispersive X-ray spectroscopy (EDS) with respect to a cross-section of the laser-cut positive electrode plate.
FIG. 7 is a graph showing the result of EDS analysis in a first selected area of a cross-section of the laser-cut positive electrode plate of FIG. 6.
FIG. 8 is a graph showing the result of EDS analysis in a second selected area of a cross-section of the laser-cut positive electrode plate of FIG. 6.
FIG. 9 is a graph showing the result of EDS analysis in a third selected area of a cross-section of the laser-cut positive electrode plate of FIG. 6.
FIG. 10 is a graph showing the result of EDS analysis in a fourth selected area of a cross-section of the laser-cut positive electrode plate of FIG. 6.
FIG. 11 is a graph showing the result of EDS analysis in a fifth selected area of a cross-section of the laser-cut positive electrode plate of FIG. 6.
FIG. 12 is an image with respect to a cross-section of the laser-cut positive electrode plate.
FIG. 13 is a Raman mapping image with respect to a cross-section of the laser-cut positive electrode plate of FIG. 12.
FIG. 14 shows, as a Comparative Example, a graph showing the result of Raman spectrum analysis in a cross-section of a positive electrode plate that is physically cut.
FIG. 15 shows, as an embodiment, a graph showing the result of Raman spectrum analysis in a cross-section of the laser-cut positive electrode plate.
FIG. 16 is a cross-sectional view showing another embodiment of a positive electrode plate applied to an all-solid-state battery according to an embodiment of the present invention.

### [Mode for Invention]

The present disclosure will be described more fully hereinafter with reference to the accompanying drawings, in which embodiments of the disclosure are shown. As those skilled in the art would realize, the described embodiments may be modified in various different ways, all without departing from the spirit or scope of the present disclosure. The drawings and description are to be regarded as illustrative in nature and not restrictive. Like reference numerals designate like elements throughout the specification.

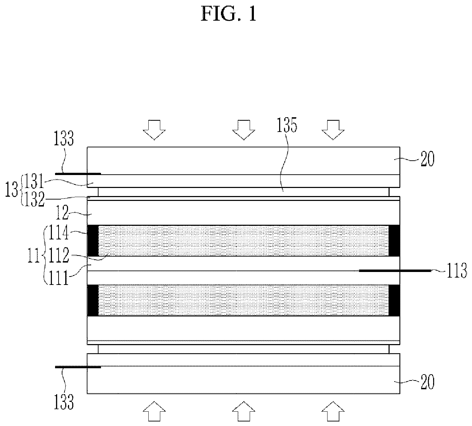

FIG. 1 may be a cross-sectional view of a charged state of an all-solid-state battery according to an embodiment of the present invention. Referring to FIG. 1, an all-solid-state battery of an embodiment may include a positive electrode plate 11, a solid electrolyte layer 12 disposed on one side of the positive electrode plate 11, a negative electrode plate 13 disposed on one side of the solid electrolyte layer 12, and a buffer film 20 disposed on one side of the negative electrode plate 13.

The stacking structure of the positive electrode plate 11, the solid electrolyte layer 12, and the negative electrode plate 13 may form a unit cell. The unit cell may be formed as a mono-cell that charges and discharges on one side of the positive electrode plate 11 (not shown).

As shown in FIG. 1, the unit cell may be formed as a bi-cell that charges and discharges on both sides of the positive electrode plate 11. The positive electrode plate 11 may be formed by laser-cutting a positive electrode current collector 111 continuously coated with the positive active material together with positive active material layers 112 and 114.

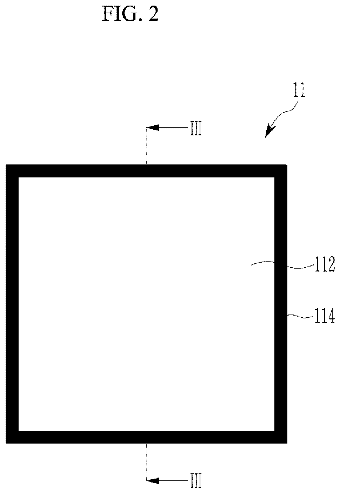

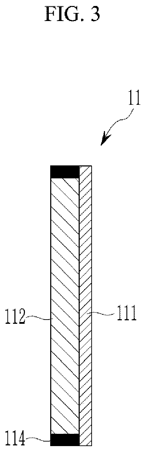

FIG. 2 is a top plan view of a positive electrode plate applied to FIG. 1, and FIG. 3 is a cross-sectional view taken along line III-III of FIG. 2. Meanwhile, referring to FIG. 1 to FIG. 3, the positive electrode plate 11 may include the active material layers 112 and 114 formed by applying the positive active material on both surfaces of the positive electrode current collector 111 made of aluminum.

The positive active material layers 112 and 114 may include an activation area 112 of the positive active material and an inactivation area 114 of the positive active material. The inactivation area 114 is a portion laser-processed on an outer boundary edge of the activation area 112, and may be formed by irradiating laser on the positive active material of outer boundary of the activation area 112 after forming the active material layer with the positive active material.

That is, when charging and discharging, whereas the activation area 112 enables entry and exit of lithium ions, the inactivation area 114 is formed in a predetermined range to block the entry and exit of lithium ions.

The inactivation area 114 may block the entry and exit of lithium ions through deformation of the active material crystal structure, by being irradiated with laser on the active material layer in the positive electrode plate 11. In addition, when the focus of the laser brought close to the positive electrode current collector 111, the positive electrode current collector 111 may be melted and deformed such that the component of the positive electrode current collector 111 may be contained in the positive active material, and thereby the inactivation area 114 may block the entry and exit of lithium ions.

As an example, the inactivation area 114 is formed in a width of 0.1 to 1 mm. If it is less than 0.1 mm, it may not be sufficient to serve as an inactivation area due to the small area of the inactivation area 114, and if it exceeds 1 mm, the capacity of the battery may be deteriorated due to the excessively large area of the inactivation area 114.

In addition, the inactivation area may block the entry and exit of lithium ions through denaturation of the solid electrolyte in the solid electrolyte layer. In this case, the solid electrolyte may be denatured by irradiating a laser to the outside of the solid electrolyte layer, and the solid electrolyte may be denatured by irradiating the laser to the outside of the solid electrolyte layer while the solid electrolyte membrane is laminated to the active material layer of the negative electrode plate.

The inactivation area 114 may prevent a short circuit due to the edge of the positive electrode plate 11, even under the high-pressure condition of the all-solid-state battery. In addition, in order to prevent a short circuit due to a damage of the edge of the positive electrode plate 11, the positive electrode plate 11 may be manufactured by laser-cutting, and the laser-cutting will be hereinafter described in detail in comparison with physical cutting.

When the positive electrode plate 11 is manufactured by laser-cutting, the occurrence of burrs on the edge of the positive electrode plate 11 may be minimize, and thus the short circuit due to the damage of the edge of the positive electrode plate 11 may be minimized.

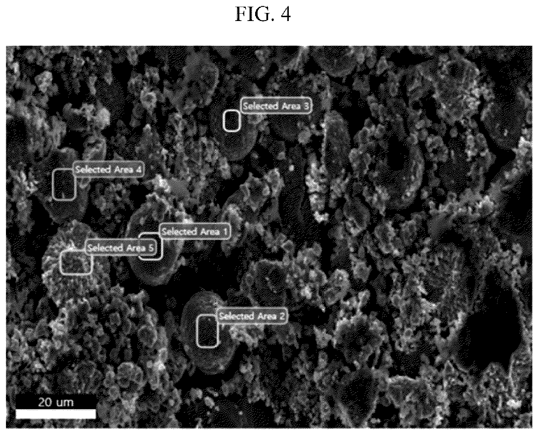

FIG. 4 shows, as a Comparative Example, an image of an energy dispersive X-ray spectroscopy (EDS) with respect to a cross-section of a positive electrode plate that is physically cut. Table 1 shows the result of EDS analysis on a cross-section of the positive electrode plate of FIG. 4 that is physically cut by using a blade. The unit is atomic%.

K indicates the K edge of the element. The K edge is caused by electronic transition in the K shell of an atom. Spectroscopically, K is a band of energy that is released after being activated when energy is applied to the element, and this specific signal is used to determine the type of element. Therefore, K represents a specific position value for finding the quantitative value of an element in an energy dispersive X-ray spectroscopy (EDS).

**[Table 1 ]**

| | Ni K | Co K | Al K |
|---|---|---|---|
| Selected Area 1 | 86.4 | 8.5 | 5.1 |
| Selected Area 2 | 87.5 | 8.7 | 3.7 |
| Selected Area 3 | 87.0 | 6.6 | 6.4 |
| Selected Area 4 | 85.8 | 8.9 | 5.3 |
| Selected Area 5 | 90.1 | 5.0 | 4.9 |

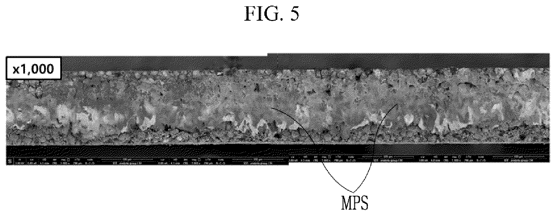

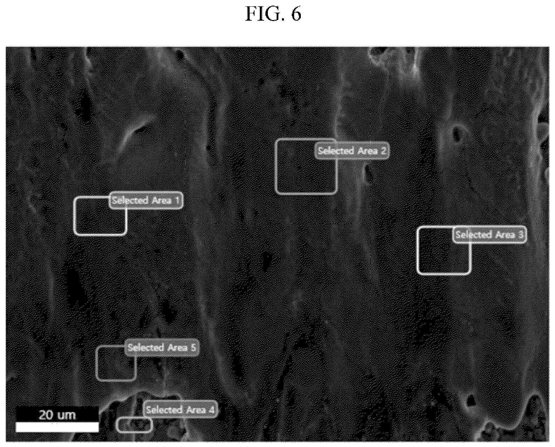

FIG. 5 shows, as an embodiment, an image of an electron microscopy (SEM) with respect to a cross-section of the laser-cut positive electrode plate, and FIG. 6 shows, as an embodiment, an image of an energy dispersive X-ray spectroscopy (EDS) with respect to a cross-section of the laser-cut positive electrode plate. Table 2 shows the result of EDS analysis on a cross-section of the laser-cut positive electrode plate 11 of FIG. 5 and FIG. 6. The unit is atomic%.

**[Table 2]**

| | Ni K | Co K | Al K |
|---|---|---|---|
| Selected Area 1 | 87.7 | 5.6 | 6.7 |
| Selected Area 2 | 90.0 | 6.0 | 4.0 |
| Selected Area 3 | 84.5 | 6.5 | 9.0 |
| Selected Area 4 | 54.6 | 5.0 | 40.4 |
| Selected Area 5 | 53.20 | 4.1 | 42.7 |

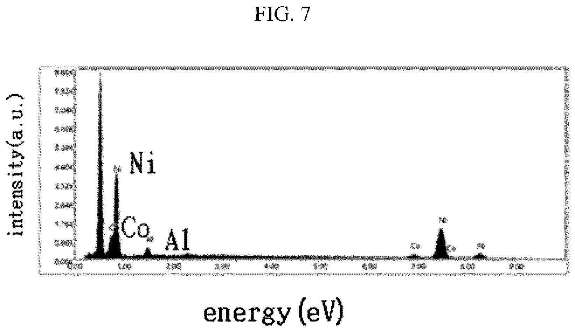

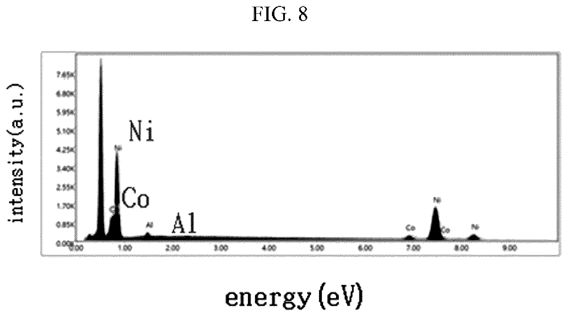

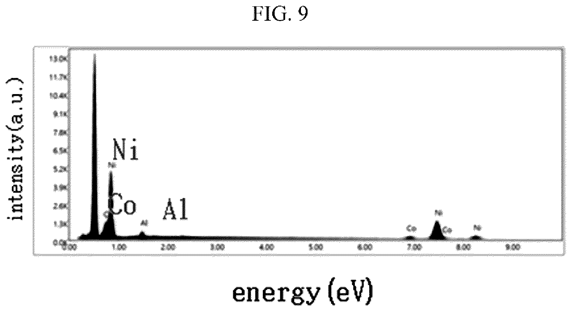

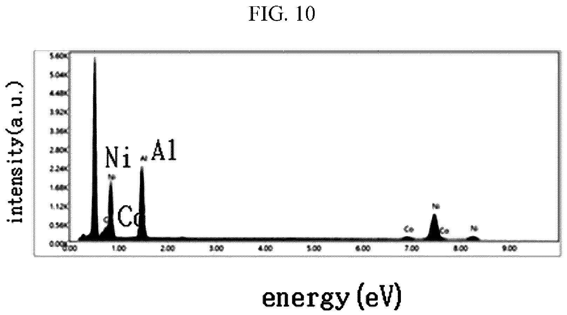

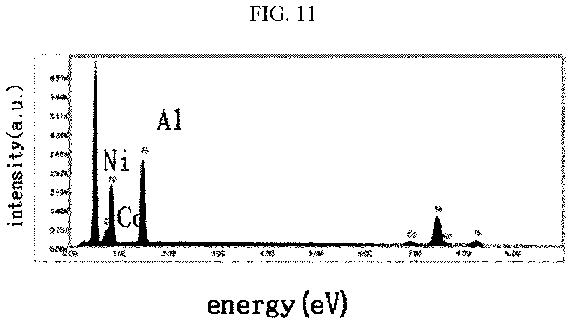

FIG. 7 to FIG. 11 are graphs showing the result of EDS analysis in the first selected area to the fifth selected area of a cross-section of the laser-cut positive electrode plate. The result of EDS analysis is expressed as a relative value (a.u) of intensity with respect to energy (eV).

Referring to FIG. 5 to FIG. 11, the positive active material formed on the cross-section of the laser-cut positive electrode plate 11 changes due to the irradiation of laser. That is, in the laser-cut cross-section, the positive electrode current collector 111 may be melt and modified to be contained in the positive active material. That is, the positive active material of the laser-cut cross-section may be formed to contain aluminum (Al) composite of the positive electrode current collector 111.

When Table 1 and FIG. 4 are compared with Table 2 and FIG. 5, a melted and pressed shape (MPS) of the positive active material due to heat is observed in the laser-cut cross-section, although not found in the physically cut cross-section.

The melted and pressed shape (MPS) may prevent damage to the edge on the laser-cut cross-section of the positive electrode plate 11, that is, prevent the positive active material from being falling off, and thereby may prevent an internal short circuit caused by the fallen positive active material.

Referring to FIG. 6, in the fourth selected area (Selected Area 4) and the fifth selected area (Selected Area 5) in the laser-cut cross-section of the positive electrode plate 11, aluminum (Al) composite of the positive electrode current collector 111 appears highly due to heat.

That is, whereas the aluminum composite is not more than 10% in the first to third selected areas (Selected Area 1 to Selected Area 3) located far from the positive electrode current collector 111 on the positive electrode plate 11, the aluminum composite has been found to be over 20% in the fourth selected area (Selected Area 4) and the fifth selected area (Selected Area 5) adjacent to the positive electrode current collector 111. That is, aluminum composite was found in 40.4% in the fourth selected area (Selected Area 4) in the laser-cut cross-section of the positive electrode plate 11, and in 42.7% in the fifth selected area (Selected Area 5).

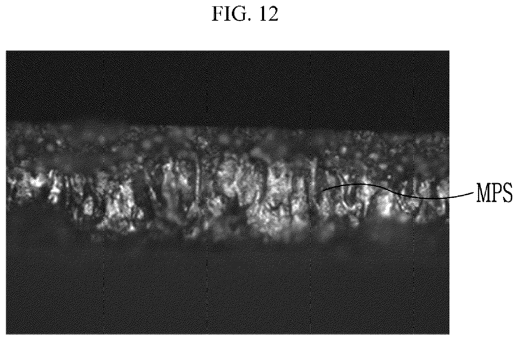

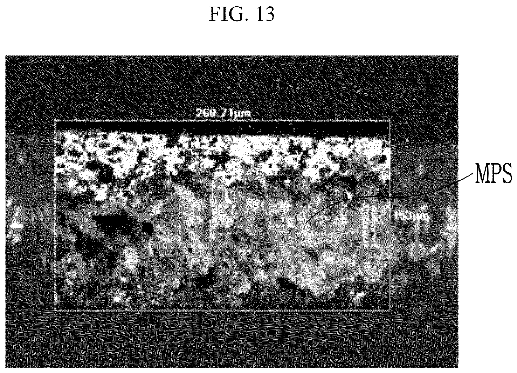

FIG. 12 is an image with respect to a cross-section of the laser-cut positive electrode plate, and FIG. 13 is a Raman mapping image with respect to a cutting cross-section of the laser-cut positive electrode plate of FIG. 12. Referring to FIG. 12 and FIG. 13, in the laser-cut cross-section of the positive electrode plate 11, the positive active material was melted by the heat and the melted and pressed shape (MPS) observed in the same way.

The melted and pressed shape (MPS) may prevent damage to the edge on the laser-cut cross-section of the positive electrode plate 11, that is, prevent the positive active material from being falling off, and thereby may prevent an internal short circuit caused by the fallen positive active material.

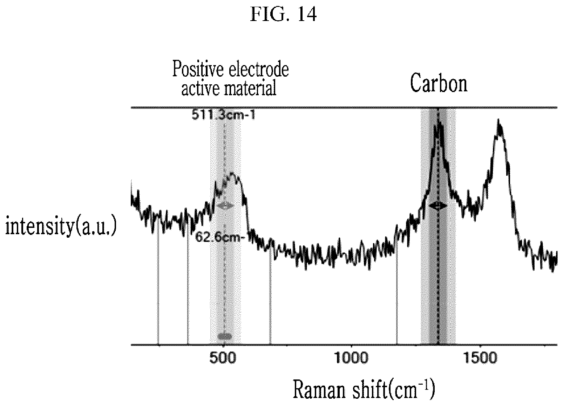

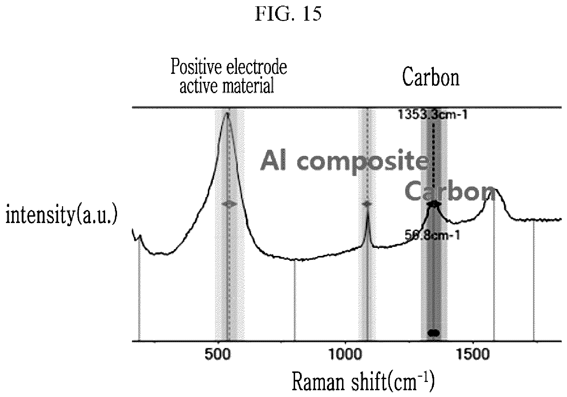

FIG. 14 shows, as a Comparative Example, a graph showing the result of Raman spectrum analysis in a cross-section of a positive electrode plate that is physically cut, and FIG. 15 shows, as an embodiment, a graph showing the result of Raman spectrum analysis in a cross-section of the laser-cut positive electrode plate. The results of Raman spectrum analysis are expressed as the relative value (a.u) of intensity with respect to Raman shift.

Referring to FIG. 12 to FIG. 15, FIG. 14 shows, as a Comparative Example, a graph showing the result of Raman spectrum analysis in a cross-section of a positive electrode plate that is physically cut, and FIG. 15 shows, as an embodiment, the result of Raman spectrum analysis in the cross-section of the laser-cut positive electrode plate 11.

Referring to the Raman spectrum analysis, unlike the physically-cut cross-section (see FIG. 14), a new peak occurred at Raman shift 1100cm⁻¹ in the laser-cut cross-section (see FIG. 15). It may be seen that this peak is a peak related to aluminum (Al) composite.

In addition, after the laser-cutting, it can be observed that a large amount of aluminum (Al) composite is created in the middle part of the thickness direction (vertical direction in FIG. 12) of the positive electrode active material. The aluminum composite included and observed in the positive active material may prevent damage to the edge on the cross-section of the positive electrode plate 11, that is, prevent the positive active material from being falling off, and thereby may prevent a short circuit caused by the fallen positive active material.

Meanwhile, the inactivation area 114 provided on the edge of the positive electrode plate 11 may be formed in the positive active material layer, like the structures formed on the cross-section of the laser-cutting by irradiating laser on the edge. The inactivation area 114 may serve to inactivate the movement of lithium ions during charging and discharging of the all-solid-state battery.

Referring back to FIG. 1, a lithium precipitation layer 135 is not formed in a discharging state, but may be formed in the charging state, as lithium ions pass through a solid electrolyte 12 and precipitate on a first surface of a negative electrode current collector 131, in the activation area 112 of the positive electrode plate 11. When discharging, the lithium ions of the lithium precipitation layer 135 are dissociated, pass through the solid electrolyte layer 12, and move to the activation area 112 of the positive electrode plate 11, such that the lithium precipitation layer 135 disappears.

Even when charging, in the inactivation area 114, lithium ions do not move to the negative electrode plate 13, and lithium ions dissociated from the lithium precipitation layer 135 during discharging do not move to the inactivation area 114 of the positive electrode plate 11. That is, the inactivation area 114 does not affect charging and discharging. Accordingly, the inactivation area 114 does not participate in the internal short circuit of the all-solid-state battery.

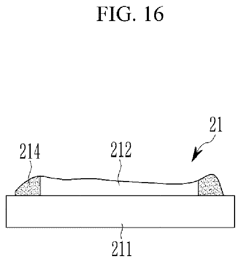

FIG. 16 is a cross-sectional view showing another embodiment of a positive electrode plate applied to an all-solid-state battery according to an embodiment of the present invention. Referring to FIG. 16, a positive electrode plate 21 may be formed by laser-cutting a positive electrode current collector 211 pattern-coated with the positive active material.

In this case, the positive active material layer may have an activation area 212 formed in a pattern and its outer boundary, that is, a convex raised portion on an edge of the pattern. At this time, an inactivation area 214 may be formed by irradiating laser on the convex raised portion on an outer boundary edge, and may block the movement of lithium ions when charging and discharging.

Referring back to FIG. 1, the negative electrode plate 13 may include a negative active material layer 132 formed by applying a negative active material on the cross-section of the negative electrode current collector 131 made of stainless steel (SUS) or nickel-coated copper (Ni-coated Cu).

For convenience, here, the negative active material layer 132 is illustrated, but the negative active material layer 132 may not be present. In this case, the precipitated lithium precipitation layer 135 may act as the negative active material layer. In addition, only a polymer layer such as a polyvinylidene fluoride layer may be formed on the cross-section of the negative electrode current collector 131.

The solid electrolyte (SE) layer 12 is laminated on the negative active material layer 132. This lamination method may be enabled by direct coating of the solid electrolyte slurry, transfer of the solid electrolyte layer, or lamination bonding between the free-standing solid electrolyte layer and the negative active material layer.

The buffer film 20 is disposed on a rear surface of the negative electrode current collector 131 of the negative electrode plate 13 in the unit cell, and may be configured to provide an elastic force to correspond to the lithium precipitation layer 135 according to precipitation and dissociation of lithium on the negative active material layer 132 and the negative electrode current collector 131 when charging and discharging.

In addition, the positive electrode plate 11 is provided with an uncoated region 113 protruding outward on a first side, and is provided with an uncoated region 133 protruding outward on a second side. When unit cells are stacked to form a module of the all-solid-state battery, the uncoated regions 113 of the positive electrode plates 11 may be stacked to each other to be electrically connected to each other, and the uncoated regions 113 of the negative electrode plates 13 may be stacked to each other to be electrically connected to each other.

While this disclosure has been described in connection with what is presently considered to be practical embodiments, it is to be understood that the disclosure is not limited to the disclosed embodiments, but, on the contrary, is intended to cover various modifications and equivalent arrangements included within the spirit and scope of the appended claims.

**- Description of symbols -**

| | | | |
|---|---|---|---|
| 11, 21: | positive electrode plate | 12: | solid electrolyte layer |
| 13: | negative electrode plate | 20: | buffer film |
| 111, 211: | positive electrode current collector | | |
| 112, 212: | activation area | | |
| 114, 214: | inactivation area | | |
| 131: | negative electrode current collector | | |
| 132: | negative active material layer | 135: | lithium precipitation layer |

## Claims

1. An all-solid-state battery, comprising:
a positive electrode plate provided with an active material on a positive electrode current collector;
a solid electrolyte layer disposed on one side of the positive electrode plate; and
a negative electrode plate disposed on one side of the solid electrolyte layer,
wherein the positive electrode plate comprises
an activation area of the active material; and
an inactivation area laser-processed on an outer boundary edge of the activation area.

2. The all-solid-state battery of claim 1, wherein the positive electrode plate is formed by laser-cutting the positive electrode current collector on which the active material is continuously coated together with an active material layer.

3. The all-solid-state battery of claim 1, wherein the inactivation area is configured to block entry and exit of lithium ions.

4. The all-solid-state battery of claim 1, wherein the inactivation area is configured to block entry and exit of lithium ions through deformation of the active material crystal structure on the positive electrode plate.

5. The all-solid-state battery of claim 1, wherein the inactivation area is configured to block entry and exit of lithium ions through denaturation of solid electrolyte in the solid electrolyte layer.

6. The all-solid-state battery of claim 1, wherein, in the inactivation area, the positive electrode current collector is melted and modified to be contained in the active material.

7. The all-solid-state battery of claim 1, wherein the positive electrode plate is formed by laser-cutting the positive electrode current collector on which the active material is pattern-coated.

8. The all-solid-state battery of claim 7, wherein the inactivation area is formed in a convex raised portion on an outer boundary edge.

9. The all-solid-state battery of claim 1, wherein the inactivation area is formed in a width of 0.1 to 1 mm.
